# EUROPÄISCHE PATENTSCHRIFT

(11) **EP 2 036 644 B1**
(45) Veröffentlichungstag und Bekanntmachung des Hinweises auf die Patenterteilung: **27.01.2010**
(21) Anmeldenummer: 07116203.6
(22) Anmeldetag: 12.09.2007
(51) Int. Cl.: B23F 5/02, B23F 5/10, B23F 19/00, B23F 23/12, B23F 5/08

(54) **Verfahren zum diskontinuierlichen Schleifen von Kegelrädern und entsprechende Software zum Steuern einer mehrachsigen Schleifmaschine**
Method for discontinuous grinding of bevel gears and corresponding software for controlling a multi-axis grinding machine
Procédé de ponçage discontinu de roues coniques et logiciel correspondant pour la commande d'une ponceuse à plusieurs axes

(43) Veröffentlichungstag der Anmeldung: 18.03.2009
(73) Patentinhaber: Klingelnberg AG, 8023 Zürich (CH)
(72) Erfinder: Dürr, Alexander, 73663 Saline, Michigan 48176 (US)
(74) Vertreter: OK pat AG

(56) Entgegenhaltungen:
- EP-A- 0 330 289
- DE-A1- 2 833 923
- GB-A- 160 832

## Beschreibung

Die Erfindung betrifft das diskontinuierliche Schleifen von Kegel- und Tellerrädern.

### HINTERGRUND DER ERFINDUNG

Es gibt Verfahren zum Schleifen der Zähne eines Kegelrads im diskontinuierlichen Verfahren (intermittent indexing process), das als Einzelteilverfahren bezeichnet wird. Die vorliegende Erfindung betrifft das diskontinuierliche Schleifen von Kegelrädern, d.h. Ritzeln und Tellerrädern, deren Zahnlücken durch ein spanendes Verfahren (z.B. Fräsen) vorgefertigt wurden. Siehe, z.B. DE 2 833 923.

Da die Anforderungen an die entsprechend gefertigten Zahnräder gestiegen sind was die Traglast, Genauigkeit und Laufruhe anbelangt, wurden diese Fertigungsverfahren weiterentwickelt und optimiert.

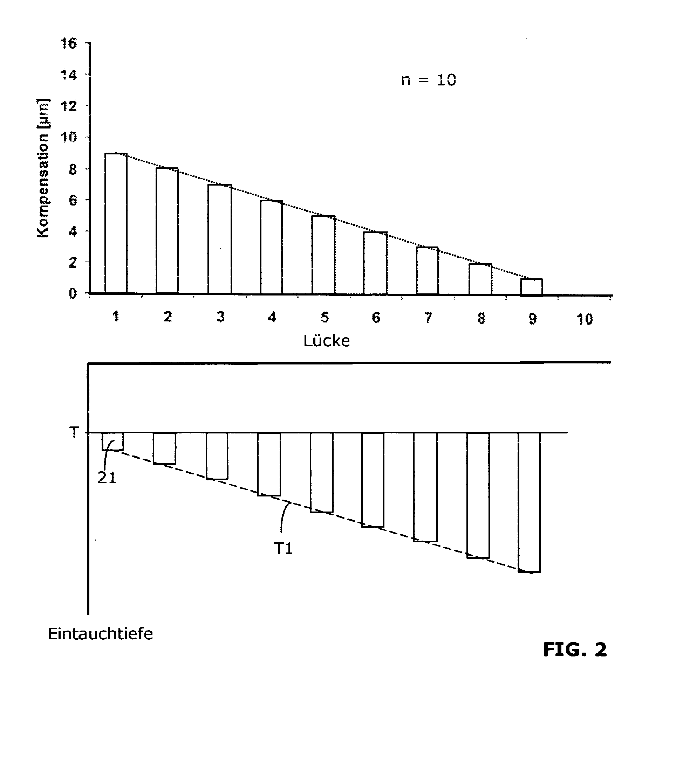

Beim Einzelteilverfahren wird eine Zahnlücke nach der anderen mittels einer Schleifscheibe fertig bearbeitet. Vorzugsweise kommen zu diesem Zweck abrichtbare Schleifscheiben zum Einsatz. Beim Schleifen im Einzelteilverfahren bearbeiteter Ritzel (auch als Antriebskegelräder bezeichnet) und Tellerräder, tritt zu Beginn des Zerspanungsprozesses an der frisch abgerichteten Schleifscheibe ein überproportional hoher Verschleiss auf, der auch als Schnellverschleiss bekannt ist. Einerseits hat dieser Verschleiss der Schleifscheibe zur Folge, dass sich die Geometrie der Schleifscheibe verändert. Das hat zur Folge, dass sich auch die Zahndicke ändert, wenn man nicht durch das Einstellen der Maschinendaten diese Veränderung der Geometrie der Schleifscheibe kompensiert. Diese Form der Kompensation, die in der Massenproduktion z.B. von Kegelrädern für Fahrzeuge angewendet wird, kann durch gezieltes Zurückhalten der Schleifscheibe erzielt werden. In Fig.2 ist eine entsprechende lineare Kompensation dargestellt.

Zum Anderen aber ergibt sich durch den Schnellverschleiss eine Veränderung der Oberflächentextur (Mikrogeometrie) der Zahnflanken. Die ersten Zahnflanken, die mit der frisch abgerichteten Schleifscheibe gefertigt wurden, haben eine andere Oberflächentextur als diejenigen Zahnflanken, die später mit der gleichen Schleifscheibe gefertigt wurden. Diese Mikrogeometrieunterschiede werden im Hinblick auf die kurzen Taktzeiten, die bei der Massenproduktion zur Verfügung stehen, häufig hingenommen, obwohl insbesondere die Laufruhe solcher Kegelradsätze dadurch negativ beeinflusst wird.

Bei Kegelrädern, die eine identische Oberflächengüte aller Zahnflanken erfordern, wird bisher die Schleifbearbeitung in mehreren Durchgängen durchgeführt, was einen zusätzlichen Zeitaufwand bedingt.

Es ist daher eine Aufgabe der Erfindung ein Verfahren und eine entsprechende Software anzubieten, die es erlauben mit möglichst einfachen Mitteln und ohne drastische Verlängerung der Taktzeiten Kegelräder mit identischer Oberflächengüte aller Zahnflanken zu erzeugen.

Die Aufgabe wird durch ein Verfahren mit den Merkmalen des Hauptanspruchs gelöst. Gemäss diesem Verfahren wird nach dem Abrichten einer Schleifscheibe eine Anzahl von künstlichen Zahnlücken (auch als virtuelle Zahnlücke(n) bezeichnet) am Werkstück gefertigt, um so möglichst schnell die Schnellverschleissphase zu überbrücken. Bei den künstlichen Zahnlücken, die so gefertigt wurden, ist die Oberflächentextur anders als bei den Zahnlücken, die nun anschliessend gefertigt werden. Da aber beim anschliessenden Fertigen der Zahnlücken die künstlichen Zahnlücken überarbeitet, bzw. nachbearbeitet werden, bekommen auch diese Zahnlücken eine Flankenoberfläche, die identisch oder nahezu identisch ist mit der Oberfläche aller anderen Zahnflanken.

Mit anderen Worten ausgedrückt, beruht die Erfindung darauf, dass eine oder mehrere Vorwegverzahnungen am Werkstück herausgearbeitet werden, bevor dann alle Zahnlücken mit der Schleifscheibe bearbeitet werden, nachdem diese die Schnellverschleissphase "überwunden" hat.

Diese künstlichen Zahnlücke(n) oder Vorwegverzahnung(en) wird/werden gemäss Erfindung bearbeitet, während die frisch abgerichtete Schleifscheibe in einer Rückhalteposition gehalten wird. D.h., die Schleifscheibe taucht in dieser Rückhalteposition nicht so tief in die zu fertigende Zahnlücke ein, wie sie dies nach dem Überwinden der Schnellverschleissphase tut.

Vorteilhafte Ausgestaltungen des erfindungsgemässen Verfahrens rfespektive der entsprechenden Software bilden die Gegenstände der abhängigen Ansprüche.

### ZEICHNUNGEN

Ausführungsbeispiele der Erfindung werden im Folgenden unter Bezugnahme auf die Zeichnungen näher beschrieben. Es zeigen:
- **FIG. 1**: eine schematische Darstellung einer Kegelradschleifmaschine mit Achsenbezeichnungen;
- **FIG. 2**: eine schematische Darstellung eines konventionellen Schleifvorgangs mit linearer Kompensation;
- **FIG. 2**: eine schematische Darstellung eines erfindungsgemässen Schleifvorgangs mit linearer sowie additiver Kompensation.

### DETAILLIERTE BESCHREIBUNG

Im Zusammenhang mit der vorliegenden Beschreibung werden Begriffe verwendet, die auch in einschlägigen Normen Verwendung finden. Es sei jedoch angemerkt, dass die Verwendung dieser Begriffe lediglich dem besseren Verständnis dienen sollen. Der erfinderische Gedanke und der Schutzumfang der Patentansprüche sollen durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäss anzuwenden.

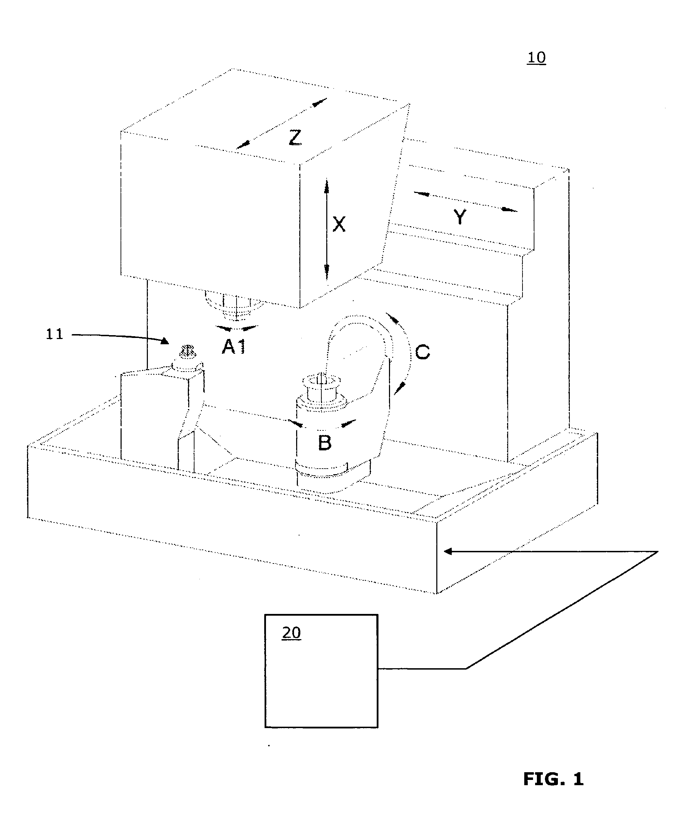

Eine beispielhafte CNC-gesteuerte Spiralkegelrad-Schleifmaschinen 10 ist in Fig. 1 gezeigt. Im Gegensatz zu den bekannten Maschinenkonzepten für Kegelradbearbeitungsmaschinen weist die Schleifmaschine 10 eine vertikale Schleifspindel (A1-Achse) auf. Das zu bearbeitende Werkstück sitzt auf der B-Achse. Die Erfindung, die im Folgenden beschrieben wird, kann aber auch auf anderen Schleifmaschinen ausgeführt werden.

Wie eingangs beschrieben, unterliegen die Schleifscheiben einem Verschleiss. Im Zusammenhang mit Fig. 2 wird von einer Schleifscheibe ausgegangen, die keinen Schnellverschleiss nach dem Abrichten aufweist, respektive es wird eine Schleifscheibe eingesetzt, bei welcher die Phase des Schnellverschleisses überwunden ist. Aber diese Schleifscheibe zeigt trotzdem einen "normalen" Verschleiss, der kompensiert werden kann, indem man beim Bearbeiten der n Zahnlücken eines Zahnrades mit n Zähnen, bei jeder Zahnlücke eine entsprechende Kompensation (im Sinne eines Rückhalts) vornimmt. In Fig. 2 ist in der oberen Abbildung die Kompensation dargestellt, die mit jeder Zahnlücke abnimmt. Bei der gezeigten Kompensation handelt es sich um eine sogenannte lineare Kompensation, wie durch die gepunktete schräge Linie dargestellt. Diese lineare Kompensation findet Anwendung, da der "normale" Verschleiss der Schleifscheibe im Wesentlichen linear ist. Da die Schleifscheibe im Prinzip mit jeder gefertigten Zahnlücke - stark vereinfacht ausgedrückt - immer kleiner wird, muss die Rücknahme entsprechend abnehmen. In der unteren Abbildung von Fig. 2 ist die entsprechende Eintauchtiefe der Schleifscheibe gezeigt. Die horizontale Line T stellt die Eintauchtiefe einer idealen Schleifscheibe dar, die keinem Verschleiss unterliegt. Wegen des erwähnten "normalen" Verschleisses muss die Schleifscheibe bei jeder zu fertigenden Zahnlücke etwas tiefer in das Werkstück eintauchen, was durch die monoton fallende, gestrichelte Linie T1 angedeutet ist.

In Fig. 2 ist ein weiterer Effekt zu erkennen. Da die Schleifscheibe eine sogenannte Verdrängung (Rückstellkraft) beim Eintauchen in die Zahnlücke erfährt, muss sie etwas tiefer eintauchen, als eigentlich rein rechnerisch erforderlich wäre. Bei der ersten Zahnlücke (mit 1 bezeichnet), muss die Schleifscheibe also etwas tiefer als T eintauchen, was durch die kleine Säule 21 angedeutet ist. Das bedeutet mit anderen Worten, dass die effektive Eintauchtiefe T1 (als gestrichelte Linie dargestellt) nicht ganz bei T beginnt, sondern die Maschinendaten so eingestellt werden müssen, dass die Schleifscheibe mit einem gewissen Druck in die Zahnlücke eintaucht.

Wie eingangs erwähnt, werden die Schleifscheiben von Zeit zu Zeit abgerichtet, wenn sie verschlissen sind. Häufig erfolgt das Abrichten nach dem Bearbeiten eines jeden Werkstücks, teilweise auch nach einigen Werkstücken, wenn die Standzeit der Schleischeibe dies zuläßt. Das Profilieren (Abrichten) der Schleifscheibe kann
in der gezeigten Schleifmaschine 10 CNC-bahngesteuert mittels einer Diamantabrichtrolle erfolgen. Eine entsprechende Abrichtvorrichtung 11 kann an der Schleifmaschine 10 vorgesehen sein, damit die Schleifscheibe zum Abrichten nicht umgespannt werden muss.

Nach dem Abrichten unterliegt die Schleifscheibe dem sogenannten Schnellverschleiss, der nicht linear ist und deutlich stärker ausgeprägt ist, als der "normale" Verschleiss.

Dementsprechend folgt man gemäss Erfindung einem anderen Ansatz, der es erlaubt auch den Schnellverschleiss kompensieren zu können. Dabei wird berücksichtigt, dass möglichst wenig Zeit beim Einsatz einer frisch abgerichteten Schleifscheibe verloren gehen soll und dass jede neu abgerichtete Schleifscheibe möglichst viele Zahnlücken fertigen soll.

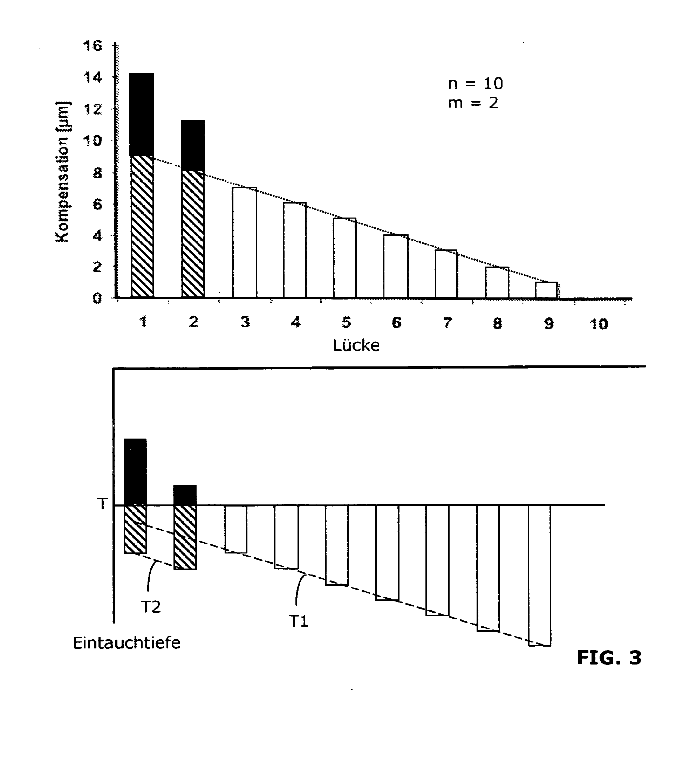

Es geht erneut um die Bearbeitung eines Zahnrads mit n Zähnen und mit n-1 Zahnlücken. In Fig. 3 ist eine entsprechendes Beispiel anhand eines Zahnrads mit n=10 Zähnen und n=10 Zahnlücken dargestellt (n ist eine ganze Zahl grösser Null). Die Schleifscheibe taucht nacheinander in jede der n Zahnlücken bis zu einer vorgegebenen Eintauchtiefe. Falls es sich um eine frisch abgerichtete Schleifscheibe handelt, kommt das folgende Verfahren zum Einsatz:
a) am Anfang der Bearbeitung des Zahnrads taucht die Schleifscheibe mit einem vordefinierten ersten Rückhalt gegenüber der normalen vorgegebenen Eintauchtiefe in m der n Zahnlücken ein. Die Zahl m = 1, 2 oder 3 und es gilt, dass m < n ist. Dieser Schritt wird auch als Vorbearbeitung bezeichnet.
   In Fig. 3 ist diese Vorbearbeitung durch schwarze Blöcke grafisch dargestellt und es gilt im gezeigten Beispiel m=2.
b) Anschliessend werden die verbleibenden n-m (d.h. 8) Zahnlücken mit der vorgegebenen, normalen Eintauchtiefe bearbeitet. Diese normale Bearbeitung der Zahnlücken 3 bis 10 ist in der oberen Grafik in Fig. 3 durch weisse Blöcke dargestellt. Hier kommt im gezeigten Beispiel erneut eine lineare Kompensation zur Anwendung (analog zu Fig. 2).
c) Abschliessend werden die m Zahnlücken nochmals mit der Schleifscheibe nachbearbeitet (in Fig. 3 durch schraffierten Blöcke dargestellt), wobei die Schleifscheibe bei dieser Nachbearbeitung mit einem vordefinierten zweiten Rückhalt gegenüber der normalen vorgegebenen Eintauchtiefe in diese m Zahnlücken eintaucht.

In der unteren Abbildung von Fig. 3 ist die entsprechende Eintauchtiefe der Schleifscheibe gezeigt. Die horizontale Line T stellt die Eintauchtiefe einer idealen Schleifscheibe dar, die keinem Verschleiss unterliegt. Wegen des erwähnten "normalen" Verschleisses muss die Schleifscheibe bei jeder zu fertigenden Zahnlücke etwas tiefer in das Werkstück eintauchen, was durch die monoton fallende, gestrichelte Linie T1 angedeutet ist. Wie beschrieben, wird gemäss Erfindung ein Vorbearbeitungsverfahren durchgeführt, nachdem die Schleifscheibe frisch abgerichtet wurde. Im Rahmen dieses Vorbearbeitungsverfahrens taucht die Schleifscheibe weniger tief in m der n Zahnlücken ein, als dies normalerweise der Fall wäre. Es kommt also bei der Festlegung des entsprechenden Rückhalts eine Abrichtkompensation zur Anwendung. Dadurch kann quasi gewährleistet werden, dass bei der Vorbearbeitung mit der frisch abgerichteten Schleifscheibe nicht mehr Material an den Zahnflanken abgetragen wird, als notwendig. Ausserdem wird durch diese zusätzlichen Vorbearbeitungsschritte gewährleistet, dass die Schleifscheibe schnell vom Schnellverschleiss in den normalen Verschleiss übergeht. Wichtig ist, dass dieses Vorbearbeitungsverfahren mit der frisch abgerichteten Scheibe an dem konkreten Werkstück durchgeführt wird und nicht an einem anderen Werkstück. D.h., die frisch abgerichtete Schleifscheibe wird auch bei der Vorbearbeitung produktiv eingesetzt.

Nachdem nun die ersten beiden Zahnlücken 1 und 2 (m=2) vorbearbeitet wurden, wie durch die schwarzen Blöcke in der unteren Abbildung von Fig. 3 angedeutet, wird die Schleifscheibe zum Bearbeiten der Zahnlücken 3 bis 10 eingesetzt, wie durch die weissen Blöcke dargestellt. Nachdem die Lücke 10 gefertigt wurde, wird das Werkstück weiter um die Achse B der Schleifmaschine 10 gedreht und die Schleifscheibe taucht erneut in die erste Zahnlücke ein, um diese Zahnlücke fertig zu bearbeiten. In der unteren Grafik von Fig. 3 ist dieses Fertigbearbeiten durch schraffierte Blöcke dargestellt. Da die erste Zahnlücke bereits im Rahmen des Vorbearbeitungsverfahrens nahezu fertig gestellt wurde, braucht die Schleifscheibe nicht mehr ganz so tief einzutauchen. Andererseits muss berücksichtig werden, dass sich die Geometrie der Schleifscheibe aufgrund des normalen Verschleisses geändert hat. Daher wird auch bei Fertigbearbeiten (Nachbearbeiten) der 1. und 2. Zahnlücke wiederum eine lineare Kompensation angewendet, wie in Fig. 3 durch die monoton fallende Linie T2 angedeutet. Gemäss Erfindung ist es aber nicht zwingend notwendig, beim Nachbearbeiten eine entsprechende Kompensation anzuwenden.

Zusammenfassend kann gesagt werden, dass gemäss Erfindung bei einer gewissen Zahl m (mit m = 1, 2 oder 3) von Zahnlücken mit einem speziellen Rückhalt vorbearbeitet wird, bevor dann die reguläre Bearbeitung der Zahnlücken folgt. Am Ende der regulären Bearbeitung erfolgt dann das Nachbearbeiten der m vorbearbeiteten Zähne. Die Bearbeitung der Zahnlücken erfolgt gemäss Erfindung im Einzelteilverfahren, d.h. diskontinuierlich.

Da es sich um eine CNC-programmierbare Schleifmaschine 10 handelt, kann in einem Programmierschritt die Schleifmaschine 10 so vorbereitet werden, dass zusätzlich zu den n zu fertigenden Zahnlücken m virtuelle Zahnlücke(n) definiert werden. Dabei ist zu beachten, dass die Umfangsposition jeder virtuellen Zahnlücke sich im Wesentlichen mit der Umfangsposition einer der n Zahnlücken deckt.

Besonders bevorzugt ist eine Schleifmaschine 10, die eine Software 20 zum Steuern der Achsen ausweist, wie in Fig. 1 angedeutet. Die Software steuert den Bearbeitungsablauf - falls sie bei der Ausführung durch die Schleifmaschine 10 Schritt für Schritt aufgeführt wird - so, dass am Anfang der Bearbeitung des Zahnrads nach dem Einsetzen einer frisch abgerichtete Schleifscheibe oder nach dem Abrichten in der Schleifmaschine 10 die erfindungsgemässen Schritte ausgeführt werden.

Besonders bevorzugt ist eine Schleifmaschine 10, die ein Signal oder eine entsprechende Information zur Verfügung stellt oder gestellt bekommt, die anzeigt, dass es sich um eine frisch abgerichtete Schleifscheibe handelt, die als nächstes zum Einsatz kommt. Bei einer Schleifmaschine 10, wie in Fig. 1 beispielhaft dargestellt, kann dieses Signal von der Maschine 10 erzeugt werden, da das Abrichten der Schleifscheibe in der Maschine 10 erfolgt.

Vorzugsweise ist die Schleifmaschine 10 so ausgelegt, dass sie selbsttätig in einen Kompensationsmodus wechselt, um die Kompensation gemäss der Schritte a) und c) durchzuführen.

Das beschriebene Verfahren eignet sich ganz besonders für das Bearbeiten von Kegelradritzeln und/oder Tellerrädern.

## Patentansprüche

1. Verfahren zum spanenden Bearbeiten der Zahnflanken eines Zahnrads mit n Zähnen und n Zahnlücken auf einer mehrachsigen Schleifmaschine (10), wobei eine abrichtbare Schleifscheibe zum Bearbeiten eingesetzt und mit dieser Schleifscheibe im Einzelteilverfahren eine der n Zahnlücken nach der anderen bearbeitet wird, indem die Schleifscheibe in jede der n Zahnlücken bis zu einer vorgegebenen Eintauchtiefe (T1) eintaucht, **dadurch gekennzeichnet, dass**, falls es sich um eine frisch abgerichtete Schleifscheibe handelt,
a) am Anfang der Bearbeitung des Zahnrads die Schleifscheibe mit einem vordefinierten ersten Rückhalt gegenüber der normalen vorgegebenen Eintauchtiefe in m der n Zahnlücken eintaucht, um diese m Zahnlücken vorzubearbeiten, wobei gilt, dass m = 1, 2 oder 3 und dass m < n ist,
b) anschliessend die verbleibenden n-m Zahnlücken mit der vorgegebenen Eintauchtiefe (T1) bearbeitet werden, und
c) abschliessend die m Zahnlücken nochmals mit der Schleifscheibe nachbearbeitet werden, wobei die Schleifscheibe bei dieser Nachbearbeitung mit einem vordefinierten zweiten Rückhalt der normalen vorgegebenen Eintauchtiefe in diese m Zahnlücken eintaucht.

2. Verfahren nach Anspruch 1, **dadurch gekennzeichnet, dass** bei einer Festlegung der vorgegebenen Eintauchtiefe (T1) eine lineare Kompensation zur Anwendung kommt, was zur Folge hat, dass mindestens im Schritt b) die vorgegebenen Eintauchtiefe (T1) mit jeder Zahnlücke um einen kleinen Wert zunimmt.

3. Verfahren nach Anspruch 1 oder 2, **dadurch gekennzeichnet, dass** bei einer Festlegung des ersten Rückhalts eine Abrichtkompensation zur Anwendung kommt, was zur Folge hat, dass unmittelbar nach dem Abrichten der Schleifscheibe beim Vorbearbeiten nach Schritt a) eine erste der m Zahnlücken mit einem grösseren Rückhalt bearbeitet wird als eine zweite der m Zahnlücken.

4. Verfahren nach Anspruch 1 oder 2, **dadurch gekennzeichnet, dass** in einem Programmierschritt die Schleifmaschine (10) so vorbereitet wird, dass zusätzlich zu den n zu fertigenden Zahnlücken m virtuelle Zahnlücke(n) definiert werden, wobei die Umfangsposition jeder virtuellen Zahnlücke sich im Wesentlichen mit der Umfangsposition einer der n Zahnlücken deckt.

5. Verfahren nach einem der vorhergehenden Ansprüche, **dadurch gekennzeichnet, dass**
- die Schleifmaschine (10) ein Signal oder eine entsprechende Information zur Verfügung stellt oder gestellt bekommt, die anzeigt, dass es sich um eine frisch abgerichtete Schleifscheibe handelt, die als nächstes zum Einsatz kommt,
- die Schleifmaschine (10) selbsttätig in einen Kompensationsmodus wechselt, um die Kompensation gemäss der Schritte a) und c) durchzuführen.

6. Verfahren nach einem der vorhergehenden Ansprüche, **dadurch gekennzeichnet, dass** es sich bei dem Zahnrad um ein Kegelradritzel oder um ein Tellerrad handelt.

7. Software (20) zum Steuern einer mehrachsigen Schleifmaschine (10), die zum spanenden Bearbeiten der Zahnflanken eines Zahnrads mit n Zähnen und n Zahnlücken im Einzelteilverfahren ausgelegt ist, wobei eine abrichtbare Schleifscheibe zum Bearbeiten eingesetzt und mit dieser Schleifscheibe diskontinuierlich eine der n Zahnlücken nach der anderen bearbeitet wird, **dadurch gekennzeichnet, dass** die Software bei der Ausführung durch die Schleifmaschine (10) den Bearbeitungsablauf so steuert, dass am Anfang der Bearbeitung des Zahnrads nach dem Einsetzen einer frisch abgerichtete Schleifscheibe in die Schleifmaschine (10) folgende Schritte ausgeführt wird:
a) Eintauchen der Schleifscheibe am Anfang der Bearbeitung des Zahnrads mit einem vordefinierten ersten Rückhalt gegenüber einer normalen vorgegebenen Eintauchtiefe in m der n Zahnlücken, um diese m Zahnlücken vorzubearbeiten, wobei gilt, dass m = 1, 2 oder 3 und dass m < n ist,
b) anschliessendes Bearbeiten der verbleibenden n-m Zahnlücken mit der vorgegebenen Eintauchtiefe, und
c) abschliessendes Nachbearbeiten der m Zahnlücken mit der Schleifscheibe, wobei die Schleifscheibe bei dieser Nachbearbeitung mit einem vordefinierten zweiten Ruckhalt gegenüber der normalen vorgegebenen Eintauchtiefe in diese m Zahnlücken eintaucht.

8. Software nach Anspruch 7, **dadurch gekennzeichnet, dass** die Software so programmierbar ist, dass bei einer Festlegung der vorgegebenen Eintauchtiefe eine lineare Kompensation zur Anwendung kommt, was zur Folge hat, dass mindestens im Schritt b) die vorgegebenen Eintauchtiefe mit jeder Zahnlücke um einen kleinen Wert zunimmt.

9. Software nach Anspruch 7 oder 8, **dadurch gekennzeichnet, dass** die Software so programmierbar ist, dass bei einer Festlegung des ersten Rückhalts eine Abrichtkompensation zur Anwendung kommt, was zur Folge hat, dass unmittelbar nach dem Abrichten der Schleifscheibe beim Vorbearbeiten nach Schritt a) eine erste der m Zahnlücken mit einem grösseren Rückhalt bearbeitet wird als eine zweite der m Zahnlücken.

10. Software nach Anspruch 7 oder 8, **dadurch gekennzeichnet, dass** die Software so programmierbar ist, dass zusätzlich zu den n zu fertigenden Zahnlücken m virtuelle Zahnlücke(n) definiert werden können, wobei die Umfangsposition jeder virtuellen Zahnlücke sich im Wesentlichen mit der Umfangsposition einer der n Zahnlücken deckt.

11. Software nach Anspruch 7 oder 8, **dadurch gekennzeichnet, dass** sie eine Routine umfasst, um festzustellen, ob eine frisch abgerichtete Schleifscheibe zum Einsatz kommt, wobei diese Routine nach dem Erkennen/Erfassen einer frisch abgerichteten Schleifscheibe die Schleifmaschinen in einem Kompensationsmodus überführt.

## Claims

1. Method for machining the tooth flanks of a gearwheel having n teeth and n tooth gaps on a multi-axis grinding machine (10), wherein a grinding disk, which can be dressed, is being used for the machining and one of the n tooth gaps after another being machined using this grinding disk in the single indexing method, in that the grinding disk plunges into each of the n tooth gaps up to a predetermined plunging depth (T1),
**characterized in that**, if it is a freshly dressed grinding disk,
a) at the beginning of the machining of the gearwheel, the grinding disk plunges into m of the n tooth gaps with a predefined first reserve in relation to the normal predetermined plunging depth, in order to pre-machine these m tooth gaps, whereby m = 1, 2, or 3 and m < n,
b) the remaining n - m tooth gaps are subsequently machined using the predetermined plunging depth (T1), and
c) finally, the m tooth gaps are post-machined once again using the grinding disk, the grinding disk plunging into these m tooth gaps using a predefined second reserve of the normal predetermined plunging depth during this post-machining.

2. Method according to claim 1, **characterized in that**, when the predetermined plunging depth (T1) is established, linear compensation is used, which has the result that at least in step b), the predetermined plunging depth (T1) increases by a small value with each tooth gap.

3. Method according to claim 1 or 2, **characterized in that**, when the first reserve is established, a dressing compensation is used, which has the result that immediately after the dressing of the grinding disk during the pre-machining according to step a), a first of the m tooth gaps is machined using a greater reserve than a second of the m tooth gaps.

4. Method according to claim 1 or 2, **characterized in that**, in a programming step, the grinding machine (10) is prepared so that in addition to the n tooth gaps to be manufactured, m virtual tooth gap(s) is/are defined, the peripheral position of each virtual tooth gap being essentially congruent with the peripheral position of one of the n tooth gaps.

5. Method according to one of the preceding claims, **characterized in that**
- the grinding machine (10) provides or is provided with a signal or corresponding information, which indicates that a freshly dressed grinding disk will be used next,
- the grinding machine (10) automatically changes into a compensation mode in order to perform the compensation according to steps a) and c).

6. Method according to one of the preceding claims, **characterized in that** the gearwheel is a bevel gear pinion or a crown wheel.

7. Software (20) for controlling a multiaxis grinding machine (10), which is designed for machining the tooth flanks of a gearwheel having n teeth and n tooth gaps in the single indexing method, whereby a grinding disk, which can be dressed, is being used for the machining and one of the n tooth gaps after another being machined discontinuously using this grinding disk, **characterized in that** the software controls the machining sequence during the execution by the grinding machine (10) so that at the beginning of the machining of the gearwheel, after a freshly dressed grinding disk has been placed in the grinding machine (10), the following steps are executed:
a) plunging the grinding disk at the beginning of the machining of the gearwheel using a predefined first reserve in relation to a normal predetermined plunging depth into m of the n tooth gaps, in order to pre-machine these m tooth gaps, with m = 1, 2, or 3 and m < n,
b) subsequently machining the remaining n - m tooth gaps using the predetermined plunging depth, and
c) finally post-machining the m tooth gaps using the grinding disk, the grinding disk plunging into these m tooth gaps using a predefined second reserve in relation to the normal predetermined plunging depth during this post-machining.

8. Software according to claim 7, **characterized in that** the software is programmable so that upon establishment of the predetermined plunging depth, a linear compensation is used, which has the result that at least in step b), the predetermined plunging depth increases by a small value with each tooth gap.

9. Software according to claim 7 or 8, **characterized in that** the software is programmable so that upon establishment of the first reserve, a dressing compensation is applied, which has the result that immediately after the dressing of the grinding disk, during the pre-machining according to step a), a first of the m tooth gaps is machined using a greater reserve than a second of the m tooth gaps.

10. Software according to claim 7 or 8, **characterized in that** the software is programmable so that, in addition to the n tooth gaps to be manufactured, m virtual tooth gap(s) may be defined, the peripheral position of each virtual tooth gap being essentially congruent with the peripheral position of one of the n tooth gaps.

11. Software according to claim 7 or 8, **characterized in that** it comprises a routine in order to establish whether a freshly dressed grinding disk is being used, this routine transferring the grinding machine into a compensation mode after the recognition/detection of a freshly dressed grinding disk.

## Revendications

1. Procédé d'usinage par enlèvement de copeaux des flancs de dents d'une roue dentée comportant n dents et n entredents sur une machine à rectifier à plusieurs axes (10), dans lequel un disque de meulage dressable est utilisé pour l'usinage, et dans lequel avec ce disque de meulage, lors d'un procédé sur pièce détachée, on usine un des n entredents après l'autre en ce que le disque de meulage pénètre dans chacun des n entredents jusqu'à une profondeur de pénétration prédéfinie (T1),
**caractérisé en ce que**, dans le cas où il s'agit d'un disque de meulage fraîchement dressé,
a) au début de l'usinage de la roue dentée, le disque de meulage pénètre dans m des n entredents avec une première retenue prédéfinie par rapport à la profondeur de pénétration prédéfinie normale, afin de dégrossir ces m entredents, où s'applique le fait que m = 1, 2 ou 3 et que m < n,
b) ensuite, les n-m entredents restants sont usinés avec la profondeur de pénétration prédéfinie (T1), et
c) ensuite, les m entredents sont une nouvelle fois usinés avec le disque de meulage, le disque de meulage pour ce finissage pénétrant avec une seconde retenue prédéfinie par rapport à la profondeur de pénétration prédéfinie normale dans ces m entredents.

2. Procédé selon la revendication 1, **caractérisé en ce que**, lors d'une détermination de la profondeur de pénétration prédéfinie (T1), on utilise une compensation linéaire, ce qui a pour conséquence qu'au moins dans l'étape b), la profondeur de pénétration prédéfinie (T1) augmente d'une petite valeur avec chaque entredent.

3. Procédé selon la revendication 1 ou 2, **caractérisé en ce que**, lors d'une détermination de la première retenue, on utilise une compensation de dressage, ce qui a pour conséquence que directement après le dressage du disque de meulage, lors du dégrossissage selon l'étape a), un premier des m entredents est usiné avec une plus grande retenue qu'un second des m entredents.

4. Procédé selon la revendication 1 ou 2, **caractérisé en ce que** dans une étape de programmation, la machine à rectifier (10) est préparée de façon telle qu'en plus des n entredents à fabriquer, on définit m entredent(s) virtuel(s), la position circonférentielle de chaque entredent virtuel coïncidant essentiellement avec la position circonférentielle d'une des n entredents.

5. Procédé selon l'une des revendications précédentes, **caractérisé en ce que**
- la machine à rectifier (10) met à disposition ou reçoit un signal ou une information correspondante qui indique qu'il s'agit d'un disque de meulage fraîchement dressé qui est utilisé ensuite,
- la machine à rectifier (10) passe automatiquement dans un mode de compensation pour réaliser la compensation selon les étapes a) et c).

6. Procédé selon l'une des revendications précédentes, **caractérisé en ce qu'**il s'agit concernant la roue dentée d'un pignon conique ou d'une couronne.

7. Logiciel (20) de commande d'une machine à rectifier à plusieurs axes (10) qui est exécutée pour l'usinage par enlèvement de copeaux des flancs de dents d'une roue dentée comportant n dents et n entredents lors d'un procédé sur pièce détachée, dans lequel un disque de meulage dressable est utilisé pour l'usinage et dans lequel avec ce disque de meulage, on usine de façon discontinue un des n entredents après l'autre, **caractérisé en ce que** le logiciel, lors de l'exécution par la machine à rectifier (10), commande le procédé d'usinage de façon telle qu'au début de l'usinage de la roue dentée, suite à l'introduction d'un disque de meulage fraîchement dressé, on exécute dans la machine à rectifier (10) les étapes suivantes :
a) pénétration du disque de meulage au début de l'usinage de la roue dentée avec une première retenue prédéfinie par rapport à une profondeur de pénétration prédéfinie normale dans m des n entredents, afin de dégrossir m entredents, et s'applique alors le fait que m = 1, 2 ou 3 et que m < n,
b) usinage ultérieur des n - m entredents restants selon la profondeur de pénétration prédéfinie, et
c) finissage final des m entredents avec le disque de meulage, le disque de meulage lors de ce finissage pénétrant dans ces m entredents avec une seconde retenue prédéfinie par rapport à la profondeur de pénétration prédéfinie normale.

8. Logiciel selon la revendication 7, **caractérisé en ce que** le logiciel est programmé de façon telle qu'on utilise une compensation linéaire lors d'une détermination de la profondeur de pénétration prédéfinie, ce qui a pour conséquence qu'au moins dans l'étape b), la profondeur de pénétration prédéfinie augmente d'une petite valeur avec chaque entredent.

9. Logiciel selon la revendication 7 ou 8, **caractérisé en ce que** le logiciel est programmé de façon telle que lors d'une détermination de la première retenue, on utilise une compensation de dressage, ce qui a pour conséquence que directement après le dressage du disque de meulage lors du dégrossissage selon l'étape a), on usine un premier des m entredents avec une retenue plus grande qu'un second des m entredents.

10. Logiciel selon la revendication 7 ou 8, **caractérisé en ce que** le logiciel est programmé de façon telle qu'en plus des n entredents à fabriquer, on peut définir m entredents virtuels, la position circonférentielle de chaque entredent virtuel coïncidant essentiellement avec la position circonférentielle d'un des n entredents.

11. Logiciel selon la revendication 7 ou 8, **caractérisé en ce qu'**il comprend un sous-programme permettant de déterminer si un disque de meulage fraîchement dressé est utilisé, ce sous-programme, après l'identification/la détection d'un disque de meulage fraîchement dressé, passant la machine à rectifier dans un mode de compensation.
